# EUROPÄISCHE PATENTANMELDUNG

(11) **EP 4 106 181 A1**
(43) Veröffentlichungstag der Anmeldung: **21.12.2022**
(21) Anmeldenummer: 21179224.7
(22) Anmeldetag: 14.06.2021
(51) Int. Cl.: H02P 21/22, B25F 5/00

(54) **ELEKTRISCHE HANDWERKZEUGMASCHINE**

(71) Anmelder: Hilti Aktiengesellschaft, 9494 Schaan (LI)
(72) Erfinder: Hurka, Florian, 86459 Margertshausen (DE)
(74) Vertreter: Hilti Aktiengesellschaft Corporate Intellectual Property

(57) **Zusammenfassung**

Elektrische Handwerkzeugmaschine, mit einem bürstenlosen Gleichstrommotor und einer Regeleinheit zur feldorientierten Regelung des Gleichstrommotors auf Basis eines Stromanforderungssignals und eines aus dem Stromanforderungssignal abgeleiteten Spannungssollwerts, wobei die Handwerkzeugmaschine weiter ausgebildet ist eine Systemspannung zur Versorgung des Gleichstrommotors bereitzustellen, wobei die Regeleinheit eingerichtet ist, das Stromanforderungssignal unter Berücksichtigung einer Spannungsdifferenz aus Systemspannung und Spannungssollwert anzupassen.

## Beschreibung

Die vorliegende Erfindung betrifft eine elektrische Handwerkzeugmaschine mit einem bürstenlosen Gleichstrommotor und einer Regeleinheit zur feldorientierten Regelung des Gleichstrommotors auf Basis eines Stromanforderungssignals und eines aus dem Stromanforderungssignal abgeleiteten Spannungssollwerts. Die Handwerkzeugmaschine ist ausgebildet, eine Systemspannung zur Versorgung des bürstenlosen Gleichstrommotors bereitzustellen.

Handwerkzeugmaschine der eingangs genannten Art sind grundsätzlich aus dem Stand der Technik bekannt. Für den Entwurf solcher feldorientierten Regelungen hat sich die d/q-Transformation als Raumzeigerdarstellung bewährt. Dementsprechend wird sie zur Beschreibung der vorliegenden Erfindung herangezogen.

Es ist Aufgabe der vorliegenden Erfindung eine elektrische Handwerkzeugmaschine anzugeben, die eine Grundlage für eine verbesserte Drehzahlregelung des bürstenlosen Gleichstrommotors schafft.

Die Aufgabe wird dadurch gelöst, dass die Regeleinheit eingerichtet ist, das Stromanforderungssignal unter Berücksichtigung einer Spannungsdifferenz aus Systemspannung und Spannungssollwert anzupassen.

Die Erfindung schließt die Erkenntnis ein, dass es bei feldorientierten Regelungen an der Spannungsgrenze, d.h. wenn die maximal bereitstellbare Systemspannung mit dem Spannungssollwert identisch oder sogar höher ist, zu sogenannten Windup-Effekten im typischerweise vorgesehenen Integral-Anteil der Regeleinheit kommen kann. Dadurch, dass die Regeleinheit auf Grund der hohen rückinduzierten Spannung den Strom nicht mehr in die Windungen des bürstenlosen Gleichstrommotors einprägen kann, werden etwaige Restfehler, die in Realität gar nicht mehr ausgeregelt werden können, im Integral-Anteil der Regeleinheit integriert. Dies führt, beim Verlassen der Spannungsgrenze zu einem unerwünschten, verzögerten Verhalten des bürstenlosen Gleichstrommotors.

Dadurch, dass die Regeleinheit eingerichtet ist, das Stromanforderungssignal auf Basis einer Spannungsdifferenz aus Systemspannung und Spannungssollwert anzupassen, wird die Grundlage für eine Vermeidung des Windup-Effekts geschaffen. Insbesondere kann beim Reglerentwurf auf die Verwendung gewisser Motorparameter, die eine Vermessung des bürstenlosen Gleichstrommotors erfordern würden, verzichtet werden. Es hat sich als vorteilhaft herausgestellt, wenn die Spannungsdifferenz durch einen von der Regeleinheit umfassten Differenzblock berechnet wird.

In einer besonders bevorzugten Ausgestaltung ist die Regeleinheit eingerichtet, die Spannungsdifferenz variabel zu berücksichtigen. Mit anderen Worten: die Regeleinheit ist insbesondere eingerichtet, dass für betragsmäßig unterschiedliche große Spannungsdifferenzen größer null jedenfalls kein konstanter Wert für die Anpassung des Stromanforderungssignals herangezogen wird. Somit wir eine besonders leistungsoptimale Regelung des bürstenlosen Gleichstrommotors begünstigt.

In einer besonders bevorzugten Ausgestaltung ist die Regeleinheit eingerichtet, die Systemspannung und/oder den Spannungssollwert in transformierter Form zu berücksichtigen. Es hat sich als vorteilhaft herausgestellt, wenn der Spannungssollwert als Quadratwurzel der Summe der Quadrate von d- Spannungssollwert und q- Spannungssollwert (d/q-Transformation) gebildet wird. Dies kann beispielsweise mittels eines von der Regeleinheit umfassten Solltransformationsblocks erfolgen. Es hat sich ebenfalls als vorteilhaft herausgestellt, wenn die Systemspannung mit dem Faktor 1/√3 (3-phasiges System) berücksichtigt wird. Dies erfolgt bevorzugt mittels eines von der Regeleinheit umfassten Systemtransformationsblocks.

In einer besonders bevorzugten Ausgestaltung ist die Regeleinheit eingerichtet, die Spannungsdifferenz zu verstärken, insbesondere mittels eines PI-Reglers (proportional-integral controller). Es hat sich als vorteilhaft herausgestellt, wenn die Regeleinheit eingerichtet ist, das Stromanforderungssignal lediglich durch eine negative Stellgröße, die mittelbar oder unmittelbar die Spannungsdifferenz repräsentiert, anzupassen. Es hat sich als vorteilhaft herausgestellt, wenn die Regeleinheit dafür einen Begrenzungsblock aufweist. Eine Anpassung des Stromanforderungssignals kann durch einen von der Regeleinheit umfassten Addierblock realisiert sein.

In einer weiteren besonders bevorzugten Ausgestaltung ist die Regeleinheit eingerichtet ist, die Spannungssollwerte zwischen einem Stromregler der Regeleinheit und dem bürstenlosen Gleichstrommotor zu ermitteln. Dies hat den Vorteil, dass die Verwendung gewisser Motorparameter, die eine aufwendige Vermessung des bürstenlosen Gleichstrommotors erfordern würden, verzichtet werden kann.

In einer besonders bevorzugten Ausgestaltung wird die Systemspannung mittels eines Akkupacks bereitgestellt. Es hat sich als vorteilhaft herausgestellt, wenn die Systemspannung vorzugsweise zwischen 12 und 36 Volt, insbesondere 12 Volt, 22 Volt oder 36 Volt beträgt. Die Systemspannung kann der Leerlaufspannung des Akkupacks entsprechen.

Es hat sich als vorteilhaft herausgestellt, wenn die Regeleinheit eingerichtet ist, das Stromanforderungssignal ausschließlich unter Berücksichtigung einer Spannungsdifferenz aus Systemspannung und Spannungssollwert anzupassen.

Weitere Vorteile ergeben sich aus der folgenden Figurenbeschreibung. In der Figur ist ein besonders bevorzugtes Ausführungsbeispiel der vorliegenden Erfindung dargestellt.

Die Figuren, die Beschreibung und die Ansprüche enthalten zahlreiche Merkmale in Kombination.

Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert. Es zeigt:

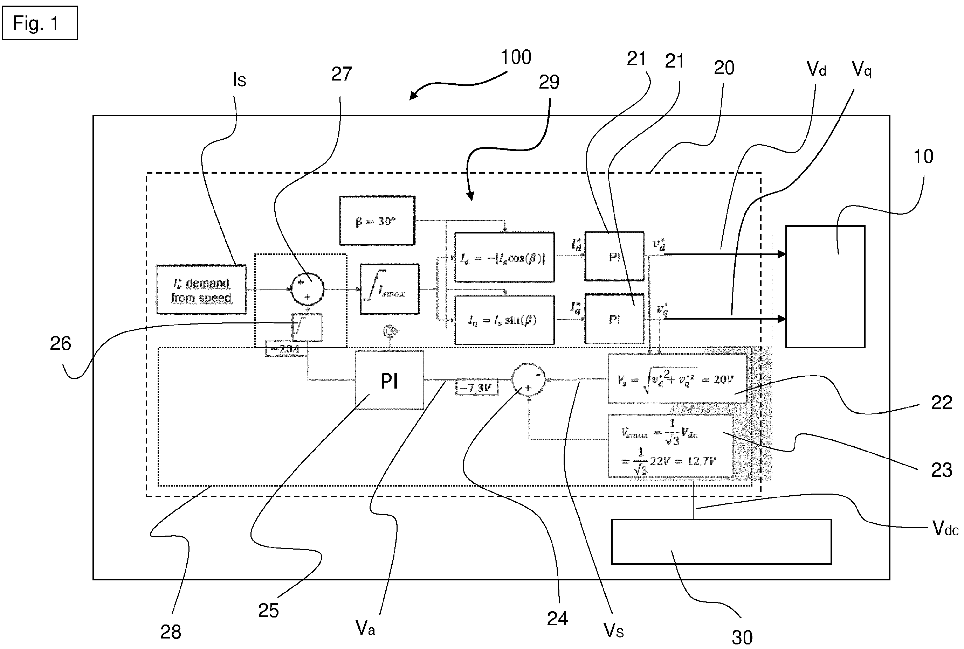

- Figur 1: ein bevorzugtes Ausführungsbeispiel einer elektrischen Handwerkzeugmaschine.

### Ausführungsbeispiel:

Figur 1 zeigt - in stark schematisierter Darstellung - eine elektrische Handwerkzeugmaschine 100.

Die Handwerkzeugmaschine 100 ist ausgestattet mit einem bürstenlosen Gleichstrommotor 10. Die Handwerkzeugmaschine 100 ist weiter ausgebildet, eine Systemspannung Vdc zur Versorgung des Gleichstrommotors 10 bereitzustellen. Dies erfolgt mit Hilfe eines Akkupacks 30, der beispielhaft eine Versorgungsspannung von 22 Volt aufweist.

Die Handwerkzeugmaschine 100 ist ebenfalls ausgestattet mit einer Regeleinheit 20 zur feldorientierten Regelung des Gleichstrommotors 10. Wie der Figur 1 entnommen werden kann, ist die Regeleinheit 20 nach d/q-Transformation dargestellt. Auf Basis eines Stromanforderungssignals Is, das beispielsweise aus einem hier nicht dargestellten Geschwindigkeitsregler stammen kann, werden in einem Vorwärtszweig 29 (in aus dem Stand der Technik bekannten Weise) Spannungssollwerte Vd, Vq für den bürstenlosen Gleichstrommotor 10 abgeleitet. Die Spannungssollwerte Vd, Vq stammen jeweils aus einem von der Regeleinheit 20 umfassten Stromregler 21. Die Stromregler 21 sind beispielhaft als PI-Regler ausgebildet. Anstelle eines PI-Reglers kann der Stromregler 21 auch als PID-Regler (proportional-integral-derivative controller) besteht aus den Anteilen eines P-Gliedes, eines I-Gliedes und eines D-Gliedes.

Die Regeleinheit 20 weist einen Rückführzweig 28 auf, der in Figur 1 durch einen gepunkteten Kasten gekennzeichnet ist. Die Regeleinheit 20 ist eingerichtet, die Spannungssollwerte Vd, Vq zwischen einem Stromregler 29 der Regeleinheit 20 und dem Gleichstrommotor 10 zu ermitteln. Danach werden die Spannungssollwerte Vd, Vq zunächst in einen Solltransformationsblock 22 geführt, um diese Werte in transformierter Form zu berücksichtigen. Im Solltransformationsblock 22 wird ein transformierter Spannungssollwert Vs als Quadratwurzel der Summe der Quadrate von d- Spannungssollwert Vd und q- Spannungssollwert Vq gebildet.

Die Regeleinheit 20 weist zusätzlich einen Systemtransformationsblock 23 auf, in dem die durch das Akkupack 30 bereitgestellte Systemspannung Vdc von beispielhaft 22 Volt in einen transformierten Systemspannungswert VSmax transformiert wird. Dies geschieht durch Multiplikation der Systemspannung Vdc mit dem Faktor 1/√3 (3-phasiges System). Der transformierter Systemspannungswert VSmax ist diejenige Phasenspannung, die für den bürstenlosen Gleichstrommotor 10, d.h. nach den Stromreglern 21, tatsächlich maximal zur Verfügung steht. Im vorliegenden Beispiel sind dies 12,7 Volt.

Gemäß einer alternativen und in den Figuren nicht gezeigte Ausführungsform weist die Handwerkzeugmaschine 100 keinen Akkupack 30 als Energieversorgung auf. In diesem Falle ist die Handwerkzeugmaschine 100 mit einem Stromkabel ausgestaltet, um die Handwerkzeugmaschine 100 mit einer Netzspannung zur Versorgung mit elektrischer Energie zu verbinden. Die bereitgestellte Systemspannung Vdc kann im Falle der Versorgung der Handwerkzeugmaschine 100 mit elektrischer Energie durch eine Netzspannung im Zwischenkreis erfasst werden.

Bei Handwerkzeugmaschine 100 ohne einen Akkupack 30 und mit einem Stromkabel kann die Systemspannung Vdc auch durch eine gleichgerichtete Zwischenkreisspannung und/oder über eine PFC optimierte Zwischenkreisspannung erzeugt werden.

Die Regeleinheit 20 ist eingerichtet das Stromanforderungssignal Is unter Berücksichtigung einer Spannungsdifferenz VA aus Systemspannung Vdc und Spannungssollwert Vd, Vq anzupassen. In dem Ausführungsbeispiel der Figur 1 wird dazu von dem transformierter Systemspannungswert VSmax der transformierte Spannungssollwert Vs in einem Differenzblock 24 abgezogen, um eine Spannungsdifferenz VA zu bilden. Im vorliegend dargestellten Ausführungsbeispiel wird auf Grund des momentanen Stromanforderungssignals Is ein transformierter Spannungssollwert Vs von 20 Volt nach den Stromreglern 21 angefordert. Da im vorliegenden Beispiel lediglich 12,7 Volt bereitgestellt werden können, ermittelt der Differenzblock 24 eine Spannungsdifferenz VA von -7,3 Volt. Diese wird über einen verstärkend wirkenden PI-Regler 25 auf einen Begrenzungsblock 26 geführt, der eingerichtet ist, das Stromanforderungssignal Is lediglich durch eine negative Stellgröße anzupassen. Demensprechend weist die Regeleinheit 20 einen Addierblock 27 auf. Das Stromanforderungssignal Is wird hier beispielhaft um 20 Ampere nach unten angepasst.

Durch den beschriebenen Rückführzweig 28 wird die Spannungsdifferenz VA variabel berücksichtigt (und nicht etwa durch eine konstante Ersatzspannung, die unabhängig von einem konkreten Betrag der Spannungsdifferenz VA ist, substituiert.)

Aus Figur 1 wird ersichtlich, dass je höher der dem jeweiligen Stromanforderungssignal Is entsprechende Spannungssollwert Vs ist, desto höher auch die Spannungsdifferenz VA ist. Dieser "Grad der Überspannung" wird durch den PI-Regler 25 verstärkt und - es handelt sich um einen negativen Wert - im Addierblock 27 von dem Stromanforderungssignal Is abgezogen. Dadurch wird eine Stromanforderung kleiner. Es ergibt sich für den nächsten Regelzyklus der Regeleinheit eine kleinere Spannungsdifferenz VA. Die Regeleinheit durchläuft diesen Vorgang so oft, bis die Spannungsdifferenz VA 0 Volt beträgt und die durch das Stromanforderungssignal Is bewirkten Spannungssollwerte Vd, Vq hier beispielhaft 12,7 Volt betragen.

Wie der Figur 1 ebenfalls entnommen werden kann, ist die Regeleinheit 20 eingerichtet ist, das Stromanforderungssignal Is ausschließlich unter Berücksichtigung einer Spannungsdifferenz VA aus Systemspannung Vdc und Spannungssollwert Vd, Vq anzupassen. Mit anderen Worten, weist der Addierblock 27 lediglich zwei Eingänge auf.

### Bezuaszeichenliste

- 10: Bürstenloser Gleichstrommotor
- 20: Regeleinheit
- 21: Stromregler
- 22: Solltransformationsblock
- 23: Systemtransformationsblock
- 24: Differenzblock
- 25: PI-Regler
- 26: Begrenzungsblock
- 27: Addierblock
- 28: Rückführzweig
- 29: Vorwärtszweig
- 30: Akkupack
- 100: Elektrische Handwerkzeugmaschine

- Is: Stromanforderungssignal
- VA: Spannungsdifferenz
- Vd: Spannungssollwert
- Vdc: Systemspannung
- Vq: Spannungssollwert
- Vs: transformierter Spannungssollwert
- VSmax: transformierter Systemspannungswert

## Patentansprüche

1. Elektrische Handwerkzeugmaschine (100), mit einem bürstenlosen Gleichstrommotor (10) und einer Regeleinheit (20) zur feldorientierten Regelung des Gleichstrommotors (10) auf Basis eines Stromanforderungssignals (IS) und eines aus dem Stromanforderungssignal abgeleiteten Spannungssollwerts (Vd, Vq), wobei die Handwerkzeugmaschine (100) weiter ausgebildet ist eine Systemspannung (Vdc) zur Versorgung des Gleichstrommotors (10) bereitzustellen,
**dadurch gekennzeichnet, dass** die Regeleinheit (20) eingerichtet ist, das Stromanforderungssignal (Is) unter Berücksichtigung einer Spannungsdifferenz (VA) aus Systemspannung (Vdc) und Spannungssollwert (Vd, Vq) anzupassen.

2. Handwerkzeugmaschine (100) nach Anspruch 1,
**dadurch gekennzeichnet, dass** die Regeleinheit (20) eingerichtet ist, die Spannungsdifferenz (VA) variabel zu berücksichtigen.

3. Handwerkzeugmaschine (100) nach Anspruch 1 oder 2,
**dadurch gekennzeichnet, dass** die Regeleinheit (20) eingerichtet ist, die Systemspannung (Vdc) und/oder den Spannungssollwert (Vd, Vq) in transformierter Form zu berücksichtigen.

4. Handwerkzeugmaschine (100) nach einem der vorangehenden Ansprüche,
**dadurch gekennzeichnet, dass** die Regeleinheit (20) eingerichtet ist, die Spannungsdifferenz (VA) zu verstärken, insbesondere mittels eines PI-Reglers (25).

5. Handwerkzeugmaschine (100) nach einem der vorangehenden Ansprüche,
**dadurch gekennzeichnet, dass** die Regeleinheit (20) eingerichtet ist, das Stromanforderungssignal (Is) lediglich durch eine negative Stellgröße, die mittelbar oder unmittelbar die Spannungsdifferenz (VA) repräsentiert, anzupassen.

6. Handwerkzeugmaschine (100) nach einem der vorangehenden Ansprüche,
**dadurch gekennzeichnet, dass** die Regeleinheit (20) eingerichtet ist, die Spannungssollwerte (Vd, Vq) zwischen einem Stromregler (29) der Regeleinheit (20) und dem Gleichstrommotor (10) zu ermitteln.

7. Handwerkzeugmaschine (100) nach einem der vorangehenden Ansprüche,
**dadurch gekennzeichnet, dass** die Regeleinheit (20) eingerichtet ist, das Stromanforderungssignal (Is) ausschließlich unter Berücksichtigung einer Spannungsdifferenz (VA) aus Systemspannung (Vdc) und Spannungssollwert (Vd, Vq) anzupassen.

8. Handwerkzeugmaschine (100) nach einem der vorangehenden Ansprüche,
**dadurch gekennzeichnet, dass** die Systemspannung (Vdc) mittels eines Akkupacks (30) bereitgestellt wird, und die Systemspannung vorzugsweise zwischen 12 und 36 Volt beträgt.

9. Handwerkzeugmaschine (100) nach einem der vorangehenden Ansprüche,
**dadurch gekennzeichnet, dass** die Handwerkzeugmaschine als Akkuschrauber ausgebildet ist.
